# EUROPEAN PATENT SPECIFICATION

(11) **EP 1 420 953 B1**
(45) Date of publication and mention of the grant of the patent: **16.04.2008**
(21) Application number: 02767844.0
(22) Date of filing: 07.08.2002
(51) Int. Cl.: B32B 37/20, B32B 38/00, B32B 27/08, B65H 35/02, B65H 39/16

(54) **METHOD FOR THE PRODUCTION OF MULTILAYER FILM FOR PACKAGINGS AND FILM PRODUCED BY SAID METHOD**
VERFAHREN ZUR HERSTELLUNG EINES MEHRSCHICHTIGEN VERPACKUNGSFILMS UND SO HERGESTELLTER VERPACKUNGSFILM
PROCEDE DE FABRICATION D'UN FILM MULTICOUCHES POUR EMBALLAGES ET FILM FABRIQUE PAR CE PROCEDE

(30) Priority: 10.08.2001 IT RM20010504; 16.11.2001 IT RM20010682; 24.04.2002 IT RM20020224
(43) Date of publication of application: 26.05.2004
(73) Proprietor: AKRO-FLEX S.a.s. di Garegnani Antonio & C., 20080 Vermezzo (MI) (IT)
(72) Inventor: GAREGNANI, Antonio, I-20080 Vermezzo (IT)
(74) Representative: Sarpi, Maurizio
(86) International application number: PCT/IT2002/000525
(87) International publication number: WO 2003/013854

(56) References cited:
- EP-A- 0 436 878
- US-A- 5 942 080

## Description

The present invention relates to a method for producing one or more strips of an extensible strengthened film, preferably of polyethylene, characterized in that each of them is formed of two or more films coupled with one another, of which at least one has an extensibility strongly reduced with respect to the other ones.

Presently, it is well known to use extensible films of polyethylene for packing goods. Depending on the kind of goods, on the weight and on their overall dimensions, films with different thickness are employed and since such films are purchased by weight, it is evident that the package costs increase proportionally to the thickness (and thus to the weight) of the used film and therefore it is useful to limit the thickness of the package films for reducing the production costs.

Moreover, double layer films are known, formed by two pre-stretched films, coupled with one another, which although having a mechanical strength higher than single layer films with the same overall thickness, they have not a high tearing resistance. Thus, if the goods to be packed are angular or have sharp projections, it is necessary to wind them by a plurality of film layers, which causes obviously an increase of the paletization cost.

Moreover, strengthened films having a limited width are frequently required, for carrying out packages having reduced sizes, without an useless waste of material.

A method according to the preamble of claim 1 is known from EP-A-436878.

A main purpose of the invention is that of providing a process for producing, starting from spools for films having the same standard width, two or more spools of strengthened films, each of them having a width corresponding to a sub-multiple of that of the starting film.

A second purpose of the invention is that of producing a strengthened film, which even though having a limited thickness, nevertheless offers a resistance suitable for packages of heavy goods and particularly a high tearing resistance.

These purposes are achieved by the method as defined in claim 1 and the film as defined in claim 6.

These and other purposes will be more evident from the following detailed disclosure and with reference to the drawings, which show, only as a non limitative example, a preferred embodiment with same modifications.

In the drawings:

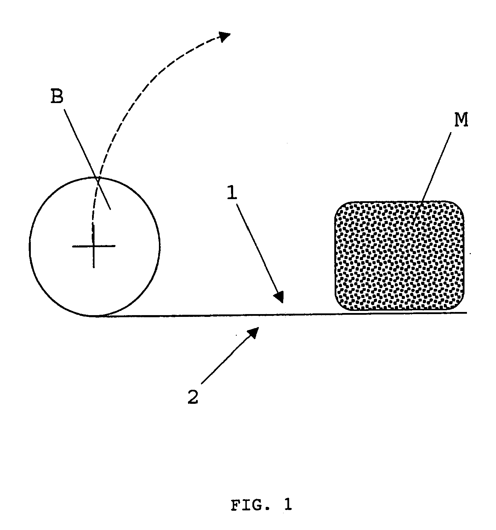

Fig. 1 shows schematically the use of the invention for packing goods, generally indicated with M;

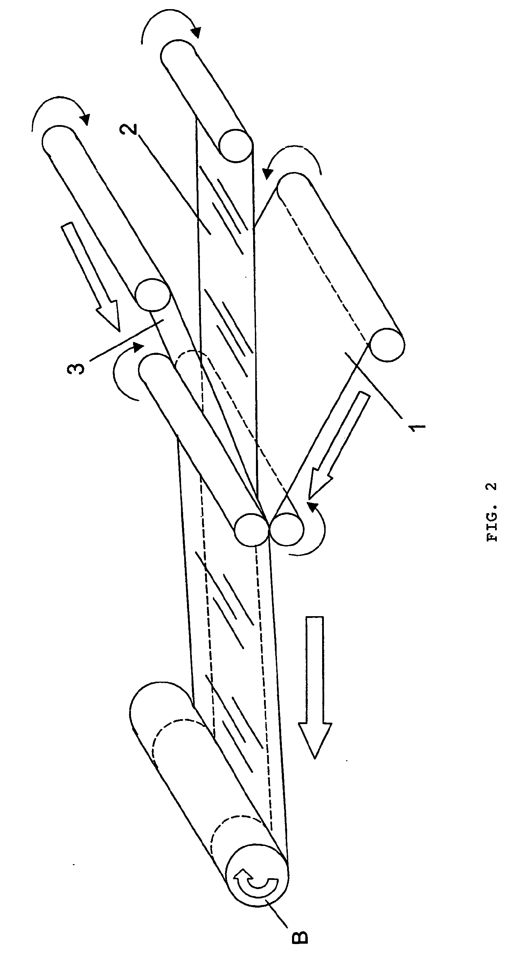

Fig. 2 shows schematically the coupling of three films for providing a package film according to the invention, formed by a single strip;

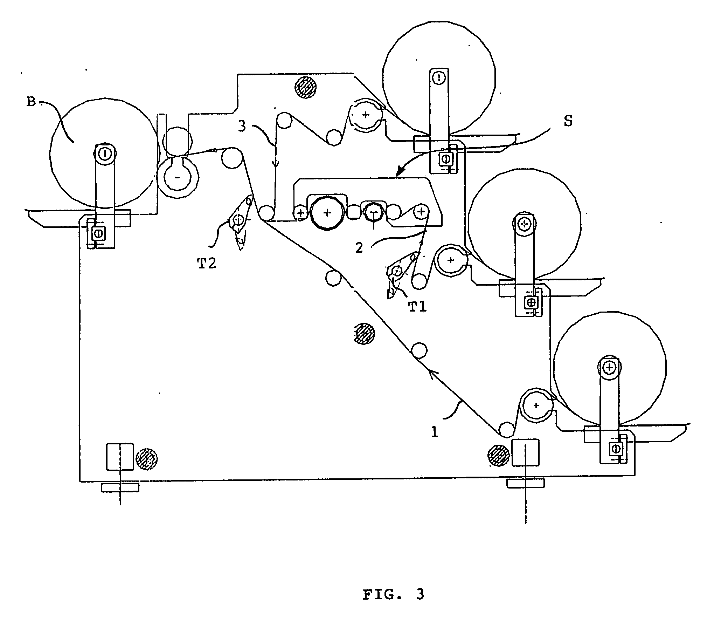

Fig. 3 shows schematically a machine for performing a multilayer film according to the present process;

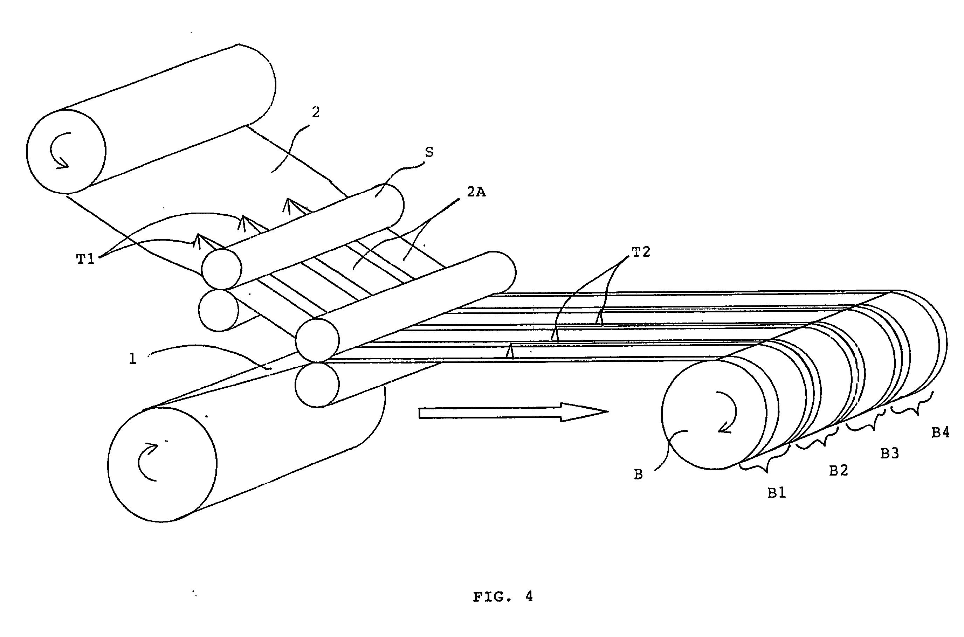

Fig. 4 shows schematically a perspective view, similar to that of Fig. 2, illustrating the operation which are performed on the starting films for attaining a multistrip end product.

According to the invention, for obtaining a multilayer package film, particularly resistant to tear and/or rips and having a width equal to or submultiple of that of the starting films, it is provided to couple one or more extensible films 1 and/or 3 with one or more films 2, having an extensibility strongly reduced with respect thereto.

This last film 2 is formed by an extensible material, even equal to that of the extensible film 1, which before the coupling has been pre-stretched till showing a very reduced residual extension.

According to the invention, for providing two or more symmetric strips of multilayer film, it is foreseen to couple one or more extensible films 1 with an extensible film 2, which is separated in two or more strips, which in their turn are stretched before being coupled to the above said extensible films 1 and to further divide the so obtained multilayer film in strips symmetric to the reinforcement strips of the stretched film 2.

It should be just mentioned that it would be also possible to subdivide a multilayer film, obtained according to the invention, only after having coupled the extensible films 1 to the pre-stretched ones; but in this case the outer lateral strips result to be provided with a lateral zone without the film of reduced or nearly null extensibility 2, whereas the inner strips would be each replaced by superposed films having the same width.

Advantageously, according to the invention it is possible to produce reinforced films of any width, notwithstanding that a sole format is provided for the raw material, thus drastically simplifying the storage management.

Furthermore, according to the present process, the stretching of the reinforcement film 2 after its division in strips, allows to attain a greater extension thereof and thus a weight reduction for length measure of the final product and a consequent economic saving, bearing in mind that these materials are sold by weight.

With this regard it is interesting to note that, according to the invention, the fact of performing the stretching step and the consequent narrowing of the material, after the step of separation in strips, automatically causes a central positioning of the strips themselves with respect to the extensible films 1, to which they are coupled in a subsequent step, so that the further cutting operation results in perfectly symmetric and equal strips, which are wound on a spool B or on collecting spools B1, B2, B3 and B4 already separated one from another and ready to be used. From the above description it is evident that the width of the strips of extensible material 1 is slightly greater than that of the strips of pre-stretched material 2.

According to the invention, in the event that the multilayer film is formed by a pre-stretched film 2 arranged between two outer extensible films 1 and 3, it is provided to wind them on a collecting spool B, so that the two (wider) extensible films 1 and 3 adhere to one another along their longitudinal edges, providing thus a high resistance film, the adhesiveness of which remains unaltered with respect to the commercial kind extensible films.

With this regard it is interesting to note that each strip of poorly extensible or pre-stretched film 2 preferably has a width smaller than that of each corresponding strip of extensible film 1 and/or 3 and is arranged centrally with respect thereto, so as to reinforce the central zone of the package film, which notoriously is the one that absorbs the greatest mechanical stresses of the package.

In a preferred embodiment, each of the extensible films 1 has a thickness preferably ranging from 14 to 35µm, whereas each of the pre-stretched films preferably has a thickness between 7 and 20µm.

The multilayer film according to the invention is particularly suitable for being used in mechanized packing machines.

Finally, it is interesting to note that the central arrangement of the pre-stretched film 2 with respect to the extensible film 1 reinforces advantageously just the central zone of the package film, which notoriously is that one sustaining the greatest mechanical stresses of the package.

Only as a simple information, it should be noted that the above mentioned extensible films preferably have an expansion per cent ranging from 100% to 300%, whereas the pre-stretched or poorly extensible film 2 preferably has an expansion per cent ranging from 10 to 100%.

A preferred embodiment of the device for performing the present method provides two separate sets of knives T1 and T2, respectively fit for cutting the first extensible film 2, before the introduction thereof into a stretching unit S, and for subdividing the multilayer film, obtained by coupling the reinforcement stretched strips 2A with the second extensible film or films 1 and 3.

The present invention has been disclosed and illustrated in its preferred embodiment, but it is obvious that a person skilled in the art would be able to introduce changes or replacements without departing from the protection scope of the present invention.

For example, each of the films wound on the spools B or B1, B2 etc. might be replaced by a stretched extensible film 2 coupled with an extensible unstretched film 1 or by an extensible stretched film 2 interposed between two extensible unstretched films 1 and 3 or also by two extensible coupled and stretched films, joined with a third extensible unstretched film etc.

## Claims

1. A method for providing a multilayer film for packages, particularly resistant to tears and/or rips, which provides to couple one or more extensible films (1,3) with one or more films (2) having strongly reduced or nearly null extensibility, **characterized in that** it provides to divide at least one extensible film (2) in two or more longitudinal strips (2A) which are stretched with a consequent narrowing thereof before being coupled with one or more extensible films (1, 3) having a width equal to that initial of said extensible film apt to be stretched (2), wherein the thus obtained multilayer film is further on cut, in a way corresponding to the previous subdivision, into strenghtened symmetric strips, which width is slightly greater than that of the corresponding reinforcement stretched strip and equal to that of the reinforcement strips (2A) before their stretching.

2. A method according to the preceding claim, **characterized in that** it comprises the further step of:
- winding the extensible strengthened symmetric strips on respective spools (B1, B2 etc.).

3. A method according to claim 1, **characterized in that** for attaining the formation of extensible strengthened strips exactly symmetric and equal to one another, which are wound on the collecting spool or spools (B, B1, B2 etc.), already separated from one another and ready to be utilized, it is provided to perform the stretching and the consequent narrowing, after the subdivision of the first extensible film (2), so as to automatically attain a symmetric and equidistant positioning of the stretched strips (2A) themselves with respect to one or more extensible films (1) to which they are coupled.

4. A method according to one of the preceding claims, **characterized in that**, in the event that the multilayer film is formed by an extensible pre-stretched film (2) arranged between two outer extensible films (1 and 3), any extensible strengthened strip is wound on a respective collecting spool so as the wider strips of the two extensible films (1 and 3) adhere to one another along their longitudinal edges, so as to provide a high resistance film, which adhesiveness is unaltered with respect to the commercial type extensible films.

5. A method according to any one of the preceding claims, **characterized in that** any one of the extensible films (1) has a thickness ranging from 14 to 35µm, whereas any one of the extensible films (2), apt to be stretched, has a thickness ranging from 7 to 20µm.

6. A multilayer film for packages, particularly resistant to tears and/or rips, **characterized in that** it is obtained by the method according to the preceding claims.

7. A multilayer film according to claim 6, **characterized in that** it is formed by two coupled films: a first extensible film (1) and a second film (2), having an extensibility much smaller with respect to the first one, thus obtaining a film provided with a high mechanic resistance to tears and rips..

8. A multilayer film according to claim 6, **characterized in that** it is formed by three coupled films: two outer extensible films (1 and 3) and a third film (2), interposed therebetween, having an extensibility much lower than the other ones, thus a film being obtained which has a high mechanic resistance to tears and rips.

9. A double layer film according to the preceding claim, **characterized in that** the above said film (2), having very reduced extensibility, is formed of a poorly extensible material or of a material which has been pre-stretched to maintain a very reduced residual extension.

10. A multilayer film according to claims 6 to 9, **characterized in that** said extensible films (1) consist of polyethylene.

## Patentansprüche

1. Verfahren zur Herstellung einer insbesondere riss- und/oder abreißfesten mehrschichtigen Verpackungsfolie, das vorsieht, eine oder mehrere dehnbare Folien (1, 3) mit einer oder mehreren Folien (2) mit stark verringerter oder nahezu keiner Dehnbarkeit zu verbinden, **dadurch gekennzeichnet, dass** es vorsieht, mindestens eine dehnbare Folie (2) in zwei oder mehrere längsverlaufende Streifen (2A) zu teilen, die gestreckt und dadurch schmaler werden, bevor sie mit einer oder mehreren dehnbaren Folien (1, 3) mit einer Breite gleich der anfänglichen Breite der dehnbaren Folie, die gestreckt werden soll, verbunden werden, wobei die so erhaltene mehrschichtige Folie in einer Weise, die der vorausgehenden Unterteilung entspricht, in verstärkte symmetrische Streifen weiter zerschnitten wird, deren Breite etwas größer als diejenige des entsprechenden gestreckten Verstärkungsstreifens und gleich derjenigen der Verstärkungsstreifen (2A) vor deren Streckung ist.

2. Verfahren nach dem vorausgehenden Anspruch, **dadurch gekennzeichnet, dass** es weiter den Schritt aufweist:
- Aufwickeln der dehnbaren, verstärkten, symmetrischen Streifen auf zugehörigen Spulen (B1, B2 etc.).

3. Verfahren nach Anspruch 1, **dadurch gekennzeichnet, dass** zur Formgebung von dehnbaren, verstärkten Streifen, die exakt symmetrisch und gleich untereinander, auf der/den Sammelspule(n) (B, B 1, B2 etc.) aufgewickelt sind, und, bereits getrennt voneinander und bereit zur Verwendung sind, es vorgesehen ist, dass das Strecken und die sich daraus ergebende Schmälerung nach der Unterteilung der ersten dehnbaren Folie (2) durchgeführt wird, um so automatisch eine symmetrische und gleich beabstandete Anordnung der gestreckten Streifen (2A) selbst in Hinblick auf eine oder mehrere dehnbare Folien (1) zu erreichen, mit denen sie verbunden werden.

4. Verfahren nach einem der vorausgehenden Ansprüche, **dadurch gekennzeichnet, dass** in dem Fall, dass die mehrschichtige Folie durch eine dehnbare, vorgestreckte Folie (2) gebildet wird, die zwischen zwei äußeren dehnbaren Folien (1 und 3) angeordnet wird, irgendein dehnbarer, gestreckter Streifen auf einer zugehörigen Sammelspule so aufgewickelt wird, dass die breiteren Streifen der zwei dehnbaren Folien (1 und 3) entlang ihrer längsverlaufenden Ränder aneinander haften, um so eine hoch feste Folie zu schaffen, deren Haftung gegenüber dehnbaren Folien des im Handel erhältlichen Typs unverändert ist.

5. Verfahren nach einem der vorausgehenden Ansprüche, **dadurch gekennzeichnet, dass** irgendeine der dehnbaren Folien (1) eine Dicke im Bereich von 14 bis 35 µm aufweist, während irgendeine der dehnbaren Folien (2), die gestreckt werden soll, eine Dicke im Bereich von 7 bis 20 µm aufweist.

6. Insbesondere riss- und/oder abreißfeste mehrschichtige Verpackungsfolie, **dadurch gekennzeichnet, dass** sie mittels des Verfahrens der vorausgehenden Ansprüche geschaffen ist.

7. Mehrschichtige Verpackungsfolie nach Anspruch 6, **dadurch gekennzeichnet, dass** sie aus zwei verbundenen Folien gebildet ist: einer ersten dehnbaren Folie (1) und einer zweiten Folie (2) mit einer gegenüber der ersten Folie viel geringeren Dehnbarkeit, wodurch eine Folie erreicht ist, die eine hohe mechanische Festigkeit gegen Risse und Abrisse aufweist.

8. Mehrschichtige Verpackungsfolie nach Anspruch 6, **dadurch gekennzeichnet, dass** sie aus drei verbundenen Folien gebildet ist: zwei äußeren dehnbaren Folien (1 und 3) und einer dritten Folie (2), die zwischen diesen angeordnet ist, mit einer Dehnbarkeit viel niedriger als die der anderen Folien, wodurch eine Folie erreicht ist, die eine hohe mechanische Festigkeit gegen Risse und Abrisse aufweist.

9. Doppelschichtige Folie nach dem vorausgehenden Anspruch, **dadurch gekennzeichnet, dass** die oben angegebene Folie (2) mit der sehr herabgesetzten Dehnbarkeit aus einem kaum dehnbaren Material oder aus einem Material gebildet ist, das vorgestreckt worden ist, um eine sehr herabgesetzte Dehnung aufrechtzuerhalten.

10. Mehrschichtige Verpackungsfolie nach Anspruch 6 bis 9, **dadurch gekennzeichnet, dass** die dehnbaren Folien (1) aus Polyethylen bestehen.

## Revendications

1. Procédé pour fournir un film à plusieurs couches pour des emballages, particulièrement résistant aux déchirures et/ou aux arrachages, qui propose de coupler un ou plusieurs films extensibles (1, 3) avec un ou plusieurs films (2) ayant une extensibilité considérablement réduite ou presque nulle, **caractérisé en ce qu'**il propose de diviser au moins un film extensible (2) en deux bandes longitudinales ou plus (2A) qui sont étirées avec leur rétrécissement conséquent, avant d'être couplé avec un ou plusieurs films extensibles (1, 3) ayant une largeur égale à la largeur initiale dudit film extensible approprié pour être étiré (2), dans lequel le film à plusieurs couches ainsi obtenu est ensuite coupé, afin de correspondre à la précédent division, en bandes symétriques renforcées, dont la largeur est légèrement supérieure à celle de la bande étirée de renforcement correspondante, et égale à celle des bandes de renforcement (2A) avant leur étirement.

2. Procédé selon la revendication précédente, **caractérisé en ce qu'**il comprend l'étape supplémentaire consistant à :
enrouler les bandes symétriques renforcées extensibles sur des bobines (B1, B2, etc.) respectives.

3. Procédé selon la revendication 1, **caractérisé en ce que** pour atteindre la formation des bandes renforcées extensibles exactement symétrique et égale les unes par rapport aux autres, qui sont enroulées sur la bobine ou les bobines de collecte (B, B1, B2, etc.), déjà séparées les unes des autres et prêtes à être utilisées, on prévoit de réaliser l'étirement et le rétrécissement résultantes, après la division du premier film extensible (2), afin d'atteindre automatiquement un positionnement symétrique et équidistant des bandes étirées (2A) elles-mêmes par rapport aux un ou plusieurs films extensibles (1) auxquels elles sont couplées.

4. Procédé selon l'une des revendications précédentes, **caractérisé en ce que** dans le cas dans lequel le film à plusieurs couches est formé par un film pré-étiré extensible (2) agencé entre deux films extensibles externes (1 et 3) toute bande renforcée extensible est enroulée sur une bobine de collecte respective de sorte que les bandes les plus larges des deux films extensibles (1 et 3) adhèrent l'une à l'autre le long de leurs bords longitudinaux afin de proposer un film à haute résistance, dont l'adhésivité demeure inchangée par rapport aux films extensibles de type commercial.

5. Procédé selon l'une quelconque des revendications précédentes, **caractérisé en ce que** l'un quelconque des films extensibles (1) a une épaisseur de l'ordre de 14 à 35 µm, alors que l'un quelconque des films extensibles (2), appropriés pour être étirés, a une épaisseur de l'ordre de 7 à 20 µm.

6. Film à plusieurs couches pour emballages, particulièrement résistant aux déchirures et/ou aux arrachages, **caractérisé en ce qu'**il est obtenu par le procédé selon les revendications précédentes.

7. Film à plusieurs couches selon la revendication 6, **caractérisé en ce qu'**il est formé par deux films couplés : un premier film extensible (1) et un second film (2), ayant une extensibilité nettement inférieure par rapport au premier, obtenant ainsi un film doté d'une haute résistance mécanique aux déchirures et aux arrachages.

8. Film à plusieurs couches selon la revendication 6, **caractérisé en ce qu'**il est formé par trois films couplés : deux films extensibles externes (1 et 3) et un troisième film (2), intercalé entre eux, ayant une extensibilité nettement inférieure aux autres, ainsi on obtient un film qui a une résistance mécanique élevée aux déchirures et aux arrachages.

9. Film à double couche selon la revendication précédente, **caractérisé en ce que** ledit film de dessus (2) ayant une extensibilité très réduite, est formé avec un matériau faiblement extensible ou avec un matériau qui a été pré-étiré pour maintenir une extension résiduelle très réduite.

10. Film à plusieurs couches selon les revendications 6 à 9, **caractérisé en ce que** lesdits films extensibles (1) se composent de polyéthylène.
